# EUROPÄISCHE PATENTSCHRIFT

(11) **EP 2 664 438 B1**
(45) Veröffentlichungstag und Bekanntmachung des Hinweises auf die Patenterteilung: **16.11.2016**
(21) Anmeldenummer: 13166146.4
(22) Anmeldetag: 01.05.2013
(51) Int. Cl.: B29C 45/27, B29C 45/28

(54) **Düsenmundstück für eine Spritzgießdüse, Spritzgießdüse und Spritzgießwerkzeug**
Nozzle piece for an injection moulding nozzle, injection moulding nozzle and injection moulding tool
Embouchure de buse pour une buse de moulage par injection, buse de moulage par injection et outil de moulage par injection

(30) Priorität: 16.05.2012 DE 102012104291
(43) Veröffentlichungstag der Anmeldung: 20.11.2013
(73) Patentinhaber: Günther Heisskanaltechnik GmbH, 35066 Frankenberg (DE)
(72) Erfinder: Günther, Herbert, 35108 Allendorf (DE); Sommer, Siegrid, 35099 Burgwald (DE)
(74) Vertreter: Patentanwälte Olbricht Buchhold Keulertz

(56) Entgegenhaltungen:
- WO-A1-2011/007099
- JP-U- S5 152 057
- US-A- 5 037 598
- US-B2- 7 841 855

## Beschreibung

Die Erfindung betrifft ein Düsenmundstück für eine Spritzgießdüse gemäß dem Oberbegriff von Anspruch 1, eine Spritzgießdüse mit einem solchen Düsenmundstück nach Anspruch 7 und ein Spritzgießwerkzeug gemäß Anspruch 8.

Um ein fließfähiges Material, insbesondere eine Schmelze, einem trennbaren Werkzeugblock bestehend aus Formplatten zuzuführen, benutzt man gewöhnlich Spritzgießdüsen, insbesondere Heiß- oder Kaltkanaldüsen. Diese haben meist einen temperierten Düsenkörper, in dem ein Strömungs- bzw. Schmelzekanal ausgebildet ist, der an oder in einem Düsenmundstück mündet und mit einer von den Formplatten gebildeten Formkavität des Spritzgießwerkzeugs strömungsverbunden ist. Damit die Schmelze bis an die Formkavität heran auf einer gleichmäßigen Temperatur gehalten wird, besteht das von unten in den Düsenkörper eingebrachte Düsenmundstück aus einem hoch wärmeleitenden Material. Außerdem ist zwischen der Spritzgießdüse und dem Werkzeug ein Luftspalt zur thermischen Trennung ausgebildet.

Von Nachteil hierbei ist, dass aufgrund der meist festen Verbindung zwischen Düsenkörper und Düsenmundstück thermische Längenausdehnungen eine Verschiebung des Düsenmundstücks relativ zur Angussöffnung bewirken. Entsprechend treten am Angusspunkt Bauteilfehler auf. Zudem kann eine Dichtung zwischen der Spritzgießdüse und der Formangussöffnung versagen, sodass Schmelze austritt und das Spritzgießwerkzeug beschädigt wird.

Das gleiche Problem besteht bei Nadelverschlussdüsen. Verschlussnadeln sind in der Nadelverschlussdüse axialverschiebbar gelagert (siehe beispielsweise DE 3249486 C3 oder DE 3403603 A1). Ein durch einen Düsenkörper verlaufender Schmelzekanal endet gewöhnlich in einem Düsenmundstück, das endseitig die Austrittsöffnung für die Schmelze bildet. In Schließstellung greift das untere Ende der im Querschnitt meist zylindrischen Verschlussnadel in einen ebenfalls zylindrischen Dichtsitz ein, der im Düsenmundstück ausgebildet ist. Die Verschlussnadeln sind vorwiegend pneumatisch oder hydraulisch angetrieben und werden periodisch von einer Öffnungs- in eine Schließstellung gebracht. Um hierbei Beschädigungen am Düsenmundstück sowie am Werkzeug zu vermeiden, ist eine möglichst exakte Nadelführung notwendig.

Zur Verringerung der auch hier auftretenden Dichtigkeitsprobleme zwischen Düsenmundstück und Formplatte sieht bspw. WO 2005 018 906 A1 eine Spritzgießdüse zur Verwendung in einem Spritzgießwerkzeug vor, die einen Düsenkörper mit wenigstens einem Strömungskanal für eine zu verarbeitende Spritzgießmasse aufweist. Der Strömungskanal mündet an oder in einem Düsenmundstück und ist mit einem Formnest des Spritzgießwerkzeugs strömungsverbunden. Das in dem Düsenkörper angeordnete Düsenmundstück ist längsverschiebbar ausgebildet und während des Betriebes der Spritzgießdüse zwischen dem Düsenkörper und einer Formplatte des Spritzgießwerkzeugs eingeklemmt. Problematisch ist hier jedoch die inkonstante Anpresskraft zwischen dem Düsenmundstück und der Formplatte. Außerdem kann sich das Düsenmundstück im Betrieb durch die Einspritzdrücke in Längsrichtung zurück verschieben. Hierdurch können Undichtigkeiten auftreten. Weiterhin kann das Düsenmundstück bei der Montage aus dem Düsenkörper herausfallen.

WO 2011/007099 A1 beschreibt eine Spritzgießdüse mit einem Materialrohr und einem Düsenmundstück. Das Düsenmundstück ist teleskopierbar in das vordere Ende des Materialrohrs eingeschoben und liegt in der montierten Position mit einem Anschlag am Materialrohr an. Das Materialrohr hat an seinem vorderen Ende eine äußere Aufweitung. An dieser Aufweitung liegt eine auf das Materialrohr aufgeschobene Spannmutter an. Diese Spannmutter wird in eine Buchse der Formplatte eingeschraubt. Das Düsenmundstück ist entweder zwischen dem Materialrohr und der Formplatte über einen definierten Abstand telekopierbar, oder das Düsenmundstück zwischen dem Materialrohr und der Formplatte verspannt.

US 7 841 855 B2 offenbart eine Spritgießdüse mit einem teleskopierbar in einem Materialrohr eingesteckten Düsenmundstück. Das Düsenmundstück kann sich zwischen einem Anschlag auf Seiten des Materialrohres und einem Anschlag auf Seiten einer Formplatte axial verschieben.

US 5 037 598 A zeigt eine Spritzgießdüse, welche endseitig in eine Verteilerplatte eingesteckt ist. In der montierten Position wird die Spritzgießdüse in eine Formangussöffnung eingesteckt und zwischen der Formangussöffnung und der Verteilerplatte verspannt. Vom hinteren Ende taucht ein Heizstab in die Spritzgießdüse ein. Die Spritzgießdüse selbst bildet eine Austrittsöffnung aus, weshalb kein separates Düsenmundstück vorgesehen ist.

Es ist ein wichtiges Ziel der Erfindung, die vorstehend genannten und weitere Nachteile des Standes der Technik zu überwinden und ein Düsenmundstück für eine Spritzgießdüse sowie zur Verwendung in einem Spritzgießwerkzeug zu schaffen, das mit einfachen Mitteln kostengünstig aufgebaut ist und einen ebenso einfachen wie raschen Wechsel des Düsenmundstücks ermöglicht. Dabei sollen Beeinträchtigungen der Temperaturverteilung und Auswirkungen der Wärmedehnung weitestgehend ausgeschaltet werden. In der Ausgestaltung der Spritzgießdüse als Nadelverschlussdüse soll darüber hinaus eine dauerhaft präzise Nadelführung und -abdichtung erreicht werden, die auch unter hoher Wechselbelastung einen stets zuverlässigen Betrieb gewährleistet.

Hauptmerkmale der Erfindung sind im kennzeichnenden Teil von Anspruch 1 sowie den Ansprüchen 7 und 8 angegeben. Ausgestaltungen sind Gegenstand der Ansprüche 2 bis 6 und 9 bis 11.

Die Erfindung betrifft ein Düsenmundstück für eine Spritzgießdüse zur Verwendung in einem Spritzgießwerkzeug und zur Verarbeitung einer fließfähigen Masse, umfassend einen Strömungskanal mit einer Eintrittsöffnung und einer Austrittsöffnung, eine radial zu einer Längsachse ausgebildete zylindrische erste Dichtfläche, wobei ausgehend von der ersten Dichtfläche der radial zur Längsachse ausgerichtete Durchmesser der ersten Dichtfläche größer oder gleich dem radial zur Längsachse ausgerichteten maximalen Durchmesser des Düsenmundstücks in Richtung der Eintrittsöffnung ist, und eine zwischen der ersten Dichtfläche und der Austrittsöffnung angeordnete Anschlagfläche, die quer zur Längsachse sowie in Richtung der Austrittsöffnung weisend ausgerichtet ist, und ein radial zur Längsachse angeordnetes Koppelmittel zur Festlegung des Düsenmundstücks in einer Formangussöffnung einer Formplatte, wobei das Koppelmittel ein Außengewinde oder ein Bajonettmittel ist, und wobei das Koppelmittel zwischen der Anschlagfläche und der Austrittsöffnung angeordnet ist.

Ein solches Düsenmundstück kann somit exakt relativ zur Formplatte im Bereich einer dort vorgesehenen Angussöffnung festgelegt werden. Über das Koppelmittel hat das Düsenmundstück in allen Betriebszuständen des Spritzgießwerkzeugs eine definierte Position und die Qualität der Anspritzpunkte ist hoch. Weiterhin ist die Anpresskraft zwischen dem Düsenmundstück und der Formplatte im Wesentlichen konstant. Mithin ist eine Dichtung zwischen dem Düsenmundstück und der Formplatte zuverlässig ausgebildet. Dennoch können thermische Längsdehnung durch eine Teleskopierbarkeit entlang der ersten zylindrischen Dichtfläche kompensiert werden. Insbesondere ist das Koppelmittel zwischen der Anschlagfläche und der Austrittsöffnung angeordnet.

In einer Ausbildung der Erfindung ist das Koppelmittel ein Außengewinde. Gewinde können mit gängigen Werkzeugen kostengünstig hergestellt werden. Zudem ist die Anpresskraft zwischen dem Düsenmundstück und der Formplatte mittels eines Eindrehens mit definiertem Drehmoment exakt einstellbar. Eine Kopplung mittels eines Gewindes erlaubt einen einfachen Austausch des Düsenmundstücks nach Abziehen der restlichen Spritzgießdüse. Zudem kann ein Gewinde wiederholt genutzt werden. Dabei sollte der radial zur Längsachse ausgerichtete Durchmesser des Koppelmittels, hier des Außengewindes, größer als der radial zur Längsachse ausgerichtete maximale Durchmesser des Düsenmundstücks in Richtung der Austrittsöffnung sein - ausgehend vom Koppelmittel.

Alternativ zum Außengewinde kann auch ein als Bajonettverschluss bzw. Bajonettmittel ausgebildetes Koppelmittel eingesetzt werden. Hier definiert sich die Anpresskraft allein durch die erreichte Endposition, sodass Fehler bei der Montage vermieden werden.

Ferner ist die Ausbildung des Koppelmittels als Halteflansch denkbar, was jedoch ohne die erfindungsgemäße Ausbildung des Koppelmittels als Außengewinde oder Bajonettmittel nicht Gegenstand der Erfindung ist. Dieser Halteflansch ist durch einen radial zur Längsachse über die erste Dichtfläche hinausstehenden Flansch ausbildbar. Ein solcher Flansch kann zudem die Anschlagfläche ausbilden. Hierfür ist der radial zur Längsachse ausgerichtete Durchmesser des Koppelmittels bevorzugt kleiner als der radial zur Längsachse ausgerichtete Durchmesser des Flansches. Ferner bildet der Flansch bevorzugt eine Werkzeugaufnahme aus, sodass die Koppelmittel leicht betätigbar sind.

Die erste Dichtfläche sollte koaxial zur Längsachse positioniert sein, um das Düsenmundstück möglichst schlank und damit geeignet für eng beabstandete Angussöffnungen auszubilden und außerdem eine Zentrierung zu erreichen, damit der Düsenkörper bzw. das Materialrohr einfach aufschiebbar ist. In einer bevorzugten Ausgestaltung der Erfindung ist die erste Dichtfläche hierfür radial außenseitig angeordnet. Zur Ermöglichung einer teleskopierbaren Lagerung am/im Düsenkörper bzw. Materialrohr ist der radial zur Längsachse ausgerichtete Durchmesser der ersten Dichtfläche bevorzugt größer oder gleich dem radial zur Längsachse ausgerichteten maximalen Durchmesser des Düsenmundstücks in Richtung der Eintrittsöffnung - ausgehend von der ersten Dichtfläche. Alternativ kann die erste Dichtfläche jedoch auch radial innenseitig angeordnet sein.

Aus analogen Überlegungen heraus sollte auch das Außengewinde koaxial zur Längsachse positioniert sein. Typischerweise ist der Strömungskanal von der Austrittsöffnung in Richtung der Eintrittsöffnung im Wesentlichen aufweitend ausgebildet. Die Eintrittsöffnung und die Austrittsöffnung können auf der Längsachse liegen und bevorzugt koaxial zur Längsachse positioniert sein. Insbesondere die Eintrittsöffnung kann jedoch auch radial zur Längsachse in der ersten Dichtfläche angeordnet werden. Dies ermöglicht insbesondere ein Anordnen der Verschlussnadeln weitestgehend außerhalb der Schmelzeführung.

Eine exakte Positionierung des Düsenmundstücks relativ zur Formangussöffnung gelingt besonders gut, wenn die Anschlagfläche senkrecht zur Längsachse ausgerichtet ist. Damit das Düsenmundstück nicht tiefer als gewollt in den Düsenkörper, bzw. das Materialrohr einschiebbar ist, wird bevorzugt eine quer zur Längsachse und in Richtung der Eintrittsöffnung zeigende zweite Anschlagfläche vorgesehen. Diese sollte wiederum senkrecht zur Längsachse ausgerichtet sein.

Trotz der einfachen Austauschbarkeit des Düsenmundstücks sieht eine Weiterentwicklung der Erfindung vor, dass dieses aus einem verschleißfesten Material gefertigt ist. Entsprechend lang sind die Wartungsintervalle. Weiterhin besteht das Düsenmundstück bevorzugt aus einem hoch wärmeleitenden Material, um eine durchströmende Schmelzemasse exakt temperieren zu können.

Gemäß einer vorteilhaften Ausgestaltung ist zwischen dem Koppelmittel und der Austrittsöffnung eine radial zur Längsachse ausgerichtete außenseitige zweite Dichtfläche ausgebildet. Somit ist die Dichtung zwischen Spritzgießdüse und Formplatte sehr nah am Formnest positioniert. Außerdem liegt das Koppelmittel auf der abgeschotteten Seite der Dichtung und wird nicht von Schmelze geflutet. Entsprechend kann das Koppelmittel auch nach zahlreichen Abspritzzyklen einfach betätigt werden.

Bevorzugt bildet die zweite Dichtfläche eine radiale Zentrierung für das Düsenmundstück, insbesondere für dessen erste Dichtfläche aus. Somit kann der Düsenkörper bzw. das Materialrohr einfach auf das festgelegte Düsenmundstück aufgesetzt werden. Hierfür ist die zweite Dichtfläche vorzugsweise koaxial zur Längsachse positioniert. Außerdem sollte die zweite Dichtfläche zylindrisch oder kegelförmig in Richtung der Austrittsöffnung verjüngend um die Längsachse ausgebildet sein, um die Zentrierung stets sicherzustellen. Der radial zur Längsachse ausgerichtete Durchmesser des Koppelmittels ist dann größer zu wählen als der radial zur Längsachse ausgerichtete Durchmesser der zweiten Dichtfläche.

In einer bevorzugten Variante der Erfindung ist die Austrittsöffnung radial zur Längsachse von einer stirnseitigen Formfläche umgeben, die in einer Montageposition einen Bereich eines Formnestes formgebend begrenzt. Durch die formnestnahe Festlegung des Düsenmundstücks an der Formplatte, kommt es kaum mehr zu einem Versatz zwischen der formgebenden Oberfläche der Formplatte und der Formfläche des Düsenmundstücks. Gleichzeitig kann das Düsenmundstück hochpräzise gefertigt sein und erlaubt so hoch qualitative Anspritzpunkte mit einer definierten Oberfläche im Bereich der Formfläche. Die Formfläche des Düsenmundstücks kann hierbei kalottenförmig ausgebildet sein, wodurch das Einströmverhalten der Schmelzemasse optimierbar ist. Zur Minimierung einer Sichtkante und Materialaufdickungen grenzt die Formfläche bevorzugt an die zweite Dichtfläche.

In einer speziellen Version des erfindungsgemäßen Düsenmundstücks ist im Strömungskanal eine radial zur Längsachse ausgerichtete Nadeldichtfläche für eine Verschlussnadel ausgebildet. Damit eignet sich das Düsenmundstück auch für Nadelverschlussdüsen. Bevorzugt ist die Nadeldichtfläche zylindrisch um die Längsachse ausgebildet sowie vorzugsweise koaxial zur Längsachse positioniert. Zur exakten Führung der Nadeldichtfläche sollten in dem Strömungskanal des Düsenmundstücks Nadelführungselemente angeordnet sein. Favorisiert sind dabei eine Ausrichtung der Nadelführungselemente längs zur Längsachse sowie eine stegförmige Gestaltung.

Gemäß einer anderen speziellen Version des erfindungsgemäßen Düsenmundstücks bildet dieses einen offenen Anguss aus. Ein solches Düsenmundstück eignet sich damit für Spritzgießdüsen ohne Verschlussnadeln, insbesondere auch für offene Angusspunkte, d.h. offene Austrittsöffnungen. Zur Optimierung der Schmelzeströmung und der Temperierung der Schmelzemasse kann das Düsenmundstück dann eine kegelförmige Düsenspitze haben oder ausbilden, die an die Austrittsöffnung heran oder über sie hinaus ragt.

Weiterhin betrifft die Erfindung eine Spritzgießdüse zur Verwendung in einem Spritzgießwerkzeug und zur Verarbeitung einer fließfähigen Masse, mit einem Düsenkörper, in dem wenigstens ein Strömungskanal mit einem Kanaleingang und einem Kanalausgang für die fließfähige Masse ausgebildet ist, wobei der Strömungskanal mit seinem Kanalausgang an oder in eine Eintrittsöffnung eines wie zuvor beschriebenen Düsenmundstücks mündet, wobei der Düsenkörper im Bereich des Kanalausgangs eine radial zur Längsachse ausgerichtete zylindrische Dichtfläche ausbildet, und wobei das Düsenmundstück mit seiner ersten Dichtfläche dichtend und in Richtung der Längsachse verschieblich an der Dichtfläche des Düsenkörpers gelagert ist.

Eine solche Spritzgießdüse kann mit der Eingangsseite an einer Maschinendüse oder einem Verteiler festgelegt sein. Gleichzeitig ist das Düsenmundstück mit seinem Koppelmittel an einer Formplatte festlegbar. Thermische Längenausdehnungen in Längsrichtung werden mittels der Teleskopierbarkeit ausgeglichen. Das Düsenmundstück bleibt stets korrekt zur Formplatte positioniert und die Dichtung zwischen Düsenmundstück und der Formplatte arbeitet zuverlässig. Die Spritzgießdüse kann dabei als Heißkanaldüse oder als Kaltkanaldüse ausgebildet sein, wobei jedoch die Vorteile der Erfindung insbesondere bei den thermisch stark beanspruchten Heißkanaldüsen zum Tragen kommen. Zum Einsatz als Heißkanaldüse sollte eine Heizeinrichtung am Düsenkörper angeordnet sein, die bevorzugt von einer Mess- und Regeleinheit mit korrespondierenden Thermoelementen geregelt wird.

Bevorzugt bildet der Düsenkörper auf Seiten des Kanalausgangs eine Anschlagfläche aus.

Diese Anschlagfläche sollte quer zur Längsachse ausgerichtet sein und mit einer Anschlagfläche des Düsenmundstücks korrespondieren. Entsprechend kann das Düsenmundstück nicht tiefer als zulässig in Richtung des Düsenkörpers verschoben werden.

In einer speziellen Variante der Spritzgießdüse ist im Strömungskanal des Düsenmundstücks eine radial zur Längsachse ausgerichteten Nadeldichtfläche ausgebildet, die in einer Geschlossenstellung der Spritzgießdüse dichtend mit einer Verschlussnadel der Spritzgießdüse korrespondiert. Hierbei ist die Verschlussnadel bevorzugt koaxial zur Längsachse und entlang der Längsachse verschiebbar gelagert.

Zur thermischen Entkopplung des Düsenmundstücks von kühleren Bauteilen, sieht eine Weiterentwicklung der Erfindung vor, dass das Düsenmundstück zwischen dem Koppelmittel und der Eintrittsöffnung wenigstens teilweise radial von einer Manschette aus einem schlecht wärmeleitenden Material umfasst ist. Zusätzlich sollte die Manschette einen Luftspalt begrenzen, welcher ebenfalls thermisch isoliert.

Ferner betrifft die Erfindung ein Spritzgießwerkzeug zur Verarbeitung einer fließfähigen Masse, mit einer wie zuvor beschriebenen Spritzgießdüse, und einer Formplatte, die ein Formnest ausbildet, in das eine Formangussöffnung mündet, wobei das Düsenmundstück mit seiner Austrittsöffnung in die Formangussöffnung eingeführt ist, und wobei die Formangussöffnung ein Koppelmittel aufweist, welches mit dem Koppelmittel des Düsenmundstücks in Eingriff steht. Vorteilhaft hierbei ist, dass das Düsenmundstück mittels der Koppelmittel eine definierte und im Wesentlichen feste Position relativ zur Formangussöffnung aufweist. Damit lassen sich die zuvor beschriebenen Vorteile der Spritzgießdüse und des Düsenmundstücks realisieren.

Entsprechend der Gestaltung des Koppelmittels des Düsenmundstücks sollte das Koppelmittel der Formangussöffnung ein radial zur Längsachse ausgerichtetes Innengewinde oder ein Bajonettmittel sein. Am gegenüberliegenden Ende kann der Düsenkörper mit dem Kanaleingang des Strömungskanals an einem Materialzubringer angeordnet und/oder festgelegt werden. Als Materialzubringer eignen sich sowohl eine Maschinendüse als auch ein Verteiler.

In einer Weiterentwicklung des Spritzgießwerkzeugs ist die Austrittsöffnung des Düsenmundstücks radial zur Längsachse von einer stirnseitigen Formfläche umgeben, die einen Bereich des Formnestes formgebend begrenzt. Auf diese Weise werden hoch qualitative Anspritzpunkte erzielt. Hierfür schließen die Formfläche und eine Formnestwandung des Formnestes bevorzugt bündig ab.

Der bündige Abschluss kann insbesondere bei einer Weiterbildung des Spritzgießwerkzeugs einfach erreicht werden, bei dem die Anschlagfläche des Düsenmundstücks an einer die Formangussöffnung radial umgebenden Anschlagfläche der Formangussöffnung anliegt.

In einer näheren Ausgestaltung des Spritzgießwerkzeugs ist vorgesehen, dass das Düsenmundstück zwischen seinem Koppelmittel und der Austrittsöffnung eine radial zur Längsachse ausgerichtete äußere zweite Dichtfläche aufweist, und dass die Formangussöffnung zwischen ihrem Koppelmittel und dem Formnest eine radial zur Längsachse ausgerichtete Innendichtfläche aufweist, wobei die zweite Dichtfläche des Düsenmundstücks und die Innendichtfläche der Formangussöffnung dichtend aneinander liegen. Entsprechend liegen die Koppelmittel außerhalb der fließfähigen Masse und bleiben daher betätigbar.

Bevorzugt sind die zweite Dichtfläche des Düsenmundstücks und die Innendichtfläche der Formangussöffnung beide zylindrisch um die Längsachse oder beide kegelförmig in Richtung des Formnestes verjüngend um die Längsachse ausgebildet. Eine möglichst schlanke Gestaltung und eine Zentrierung werden insbesondere dann erzielt, wenn die zweite Dichtfläche und die Innendichtfläche der Formangussöffnung koaxial zur Längsachse positioniert sind.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Es zeigen:
- Fig. 1: eine 3D-Ansicht eines Düsenmundstücks;
- Fig. 2: einen Längsschnitt durch einen Ausschnitt eines Spritzgießwerkzeugs umfassend eine Spritzgießdüse mit einer Verschlussnadel und einem Düsenmundstück; und
- Fig. 3: eine Detailansicht des Düsenmundstücks aus Fig. 2.

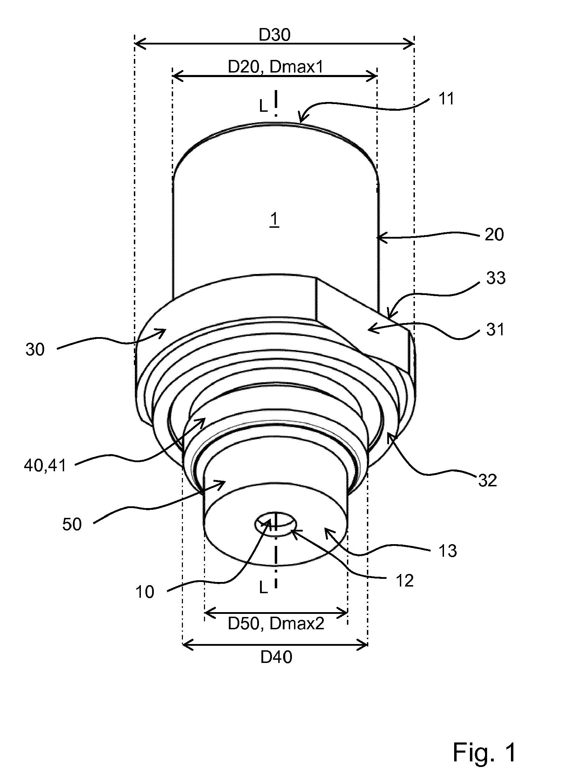

Fig. 1 zeigt eine 3D-Ansicht eines Düsenmundstücks 1 für eine Spritzgießdüse 100 zur Verwendung in einem Spritzgießwerkzeug 200 und zur Verarbeitung einer fließfähigen Masse M. Hergestellt ist das Düsenmundstück 1 aus einem verschleißfesten und hoch wärmeleitenden Material. Es hat einen Strömungskanal 10 mit einer Eintrittsöffnung 11 (verdeckt) und einer Austrittsöffnung 12. Die Eintrittsöffnung 11 und die Austrittsöffnung 12 liegen koaxial auf einer Längsachse L. Der Strömungskanal 10 ist von der Austrittsöffnung 12 in Richtung der Eintrittsöffnung 11 aufweitend ausgebildet.

Radial und koaxial zur Längsachse L ist eine zylindrische erste Dichtfläche 20 mit einem Durchmesser D20 ausgebildet. Dabei ist die erste Dichtfläche 20 radial außenseitig angeordnet. Der radial zur Längsachse L ausgerichtete Durchmesser D20 der ersten Dichtfläche 20 entspricht dem radial zur Längsachse L ausgerichteten maximalen Durchmesser Dmax1 des Düsenmundstücks 1 in Richtung der Eintrittsöffnung 11.

Zwischen der ersten Dichtfläche 20 und der Austrittsöffnung 12 ist eine Anschlagfläche 32 angeordnet, die quer zur Längsachse L sowie in Richtung der Austrittsöffnung 12 weisend ausgerichtet ist. Insbesondere ist die Anschlagfläche 32 senkrecht zur Längsachse L ausgerichtet. Wie man erkennt, ist die Anschlagfläche 32 von einem radial zur Längsachse L über die erste Dichtfläche 20 hinausstehenden Flansch 30 ausgebildet.

Der Flansch 30 bildet zudem eine quer zur Längsachse L und in Richtung der Eintrittsöffnung 11 zeigende zweite Anschlagfläche 33 aus. Diese ist ebenso senkrecht zur Längsachse L ausgerichtet. Weiterhin dient der Flansch 30 als Werkzeugaufnahme 31, insbesondere durch vorgesehene abgeflachte Seitenflächen.

Das Düsenmundstück 1 umfasst ferner ein radial zur Längsachse L angeordnetes Koppelmittel 40 zur Festlegung des Düsenmundstücks 1 in einer Formangussöffnung 202 (hier nicht gezeigt) einer Formplatte 201 (hier nicht gezeigt). Insbesondere ist das Koppelmittel 40 ein Außengewinde 41, welches koaxial zur Längsachse L positioniert ist. Das Koppelmittel 40, bzw. das Außengewinde 41, ist zwischen der Anschlagfläche 32 und der Austrittsöffnung 12 angeordnet. Der radial zur Längsachse L ausgerichtete Durchmesser D40 des Koppelmittels 40, bzw. des Außengewindes 41, ist kleiner als der radial zur Längsachse L ausgerichtete Durchmesser D30 des Flansches 30. Außerdem ist der Durchmesser D40 des Koppelmittels 40 größer als der radial zur Längsachse L ausgerichtete maximale Durchmesser Dmax2 des Düsenmundstücks 1 in Richtung der Austrittsöffnung 12.

Zwischen dem Koppelmittel 40 und der Austrittsöffnung 12 ist eine radial und koaxial zur Längsachse L ausgerichtete außenseitige, zylindrische zweite Dichtfläche 50 ausgebildet. Hierdurch dient die zweite Dichtfläche 50 auch als radiale Zentrierung. Der Durchmesser D40 des Koppelmittels 40 ist größer als der radial zur Längsachse L ausgerichtete Durchmesser D50 der zweiten Dichtfläche 50.

Die Austrittsöffnung 12 des Düsenmundstücks 1 ist radial zur Längsachse A von einer stirnseitigen Formfläche 13 umgeben, die in einer Montageposition einen Bereich eines Formnestes 203 (hier nicht gezeigt) formgebend begrenzt. Dabei grenzt die Formfläche 13 an die zweite Dichtfläche 50.

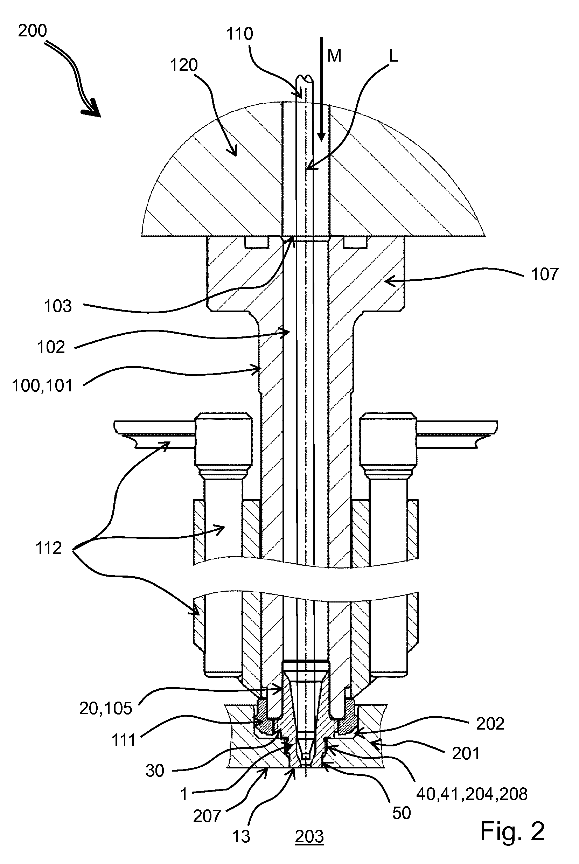

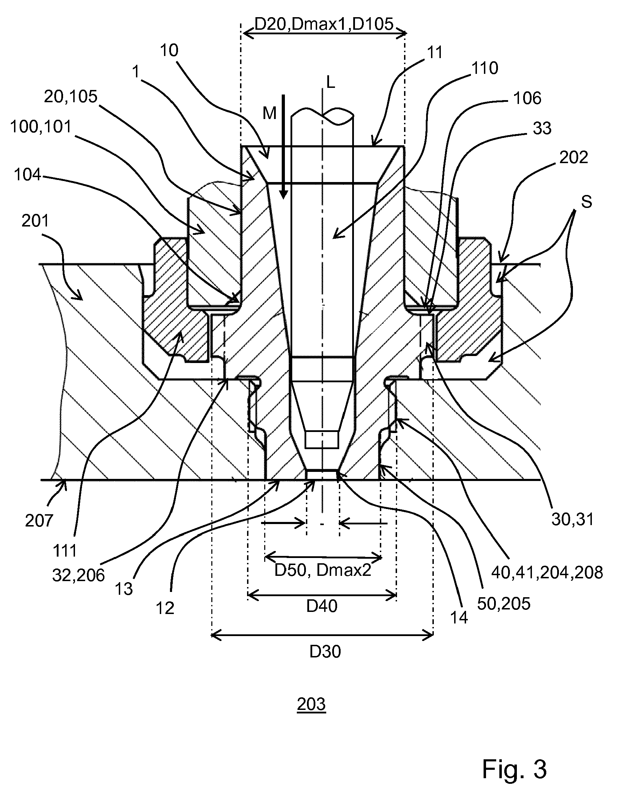

In Fig. 2 sieht man einen Längsschnitt durch einen Ausschnitt eines Spritzgießwerkzeugs 200 zur Verarbeitung einer fließfähigen Masse M, umfassend eine Spritzgießdüse 100 mit einer Verschlussnadel 110 und einem Düsenmundstück 1 entsprechend einer Gestaltung nach Fig. 1. In Fig. 3 sieht man das Düsenmundstück aus Fig. 2 nochmals in einer Detailansicht. Wie man insbesondere in Fig. 3 erkennen kann, ist im Strömungskanal 10 des Düsenmundstücks 1 eine radial und koaxial zur Längsachse L ausgerichtete zylindrische Nadeldichtfläche 14 für eine Verschlussnadel 110 ausgebildet. Nicht erkennbar sind allerdings in dem Strömungskanal 10 angeordnete Nadelführungselemente.

Die in Fig. 2 dargestellte Spritzgießdüse 100 hat einen Düsenkörper 101, in dem ein Strömungskanal 102 mit einem Kanaleingang 103 und einem Kanalausgang 104 (siehe Fig. 3) für die fließfähige Masse M ausgebildet ist. Der Kanaleingang 103 und der Kanalausgang 104 liegen koaxial auf der Längsachse L, welche der Längsachse L des Düsenmundstücks 1 entspricht. Auch der Strömungskanal 102 verläuft entlang der Längsachse L, insbesondere koaxial zu dieser. Der Strömungskanal 102 mündet mit seinem Kanalausgang 104 in die Eintrittsöffnung 11 des Düsenmundstücks 1. Im Bereich des Kanalausgangs 104 bildet der Düsenkörper 101 eine radial und koaxial zur Längsachse L ausgerichtete, zylindrische sowie innenseitige Dichtfläche 105 aus. Das Düsenmundstück 1 ist mit seiner ersten Dichtfläche 20 dichtend und in Richtung der Längsachse L verschieblich an der Dichtfläche 105 des Düsenkörpers 101 gelagert.

Der der Düsenkörper 101 bildet zudem auf Seiten des Kanalausgangs 104 eine Anschlagfläche 106 aus, die quer zur Längsachse L ausgerichtet ist und mit der Anschlagfläche 32 des Düsenmundstücks 1 korrespondiert.

Die Verschlussnadel 110 erstreckt sich entlang der Längsachse L, insbesondere koaxial zu dieser, durch den Strömungskanal 102 des Düsenkörpers 101 und in den Strömungskanal 10 des Düsenmundstücks 1 hinein. Dabei ist sie entlang der Längsachse L verschiebbar gelagert. In einer Geschlossenstellung (nicht gezeigt) der Spritzgießdüse 100 liegt die Verschlussnadel 110 dichtend an der Nadeldichtfläche 14 an.

Zwischen dem Außengewinde 41 und der Eintrittsöffnung 11 ist das Düsenmundstück 1 teilweise radial von einer Manschette 111 aus einem schlecht wärmeleitenden Material umfasst. Zusätzlich begrenzt die Manschette 111 einen Luftspalt S. Hierbei wird die Manschette 111 vom Düsenkörper 101 getragen, nicht jedoch vom Düsenmundstück 1.

Neben der Spritzgießdüse 100 umfasst das Spritzgießwerkzeug 200 eine Formplatte 201, die ein Formnest 203 (Position nur angedeutet) ausbildet, in das eine Formangussöffnung 202 mündet (erkennbar in Fig. 2 und 3). Das Düsenmundstück 1 ist mit seiner Austrittsöffnung 12 in die Formangussöffnung 202 eingeführt. Dabei weist die Formangussöffnung 202 ein Koppelmittel 204 auf, welches mit dem Koppelmittel 40 des Düsenmundstücks 1 in Eingriff steht. Insbesondere ist das Koppelmittel 204 der Formangussöffnung 202 entsprechend des Koppelmittels 40 des Düsenmundstücks 1 ein radial und koaxial zur Längsachse L ausgerichtetes Innengewinde 208. Die Anschlagfläche 32 des Düsenmundstücks 1 liegt an einer die Formangussöffnung 202 radial umgebenden Anschlagfläche 206 der Formangussöffnung 202 an. Mithin hat das Düsenmundstück 1 eine definierte und im Wesentlichen feste Position relativ zur Formangussöffnung 202.

Wie zu erkennen ist, begrenzt die stirnseitigen Formfläche 13 des Düsenmundstücks 1 einen Bereich des Formnestes 203 formgebend. Hierfür schließt die Formfläche 13 des Düsenmundstücks 13 bündig mit einer Formnestwandung 207 des Formnestes 203 ab. Zwischen dem Koppelmittel 40 und der Austrittsöffnung 12 hat das Düsenmundstück 1 eine radial und koaxial zur Längsachse L ausgerichtete äußere zweite Dichtfläche 50, welche an dessen Formfläche 13 angrenzt. Die Formangussöffnung 202 wiederum weist zwischen ihrem Koppelmittel 204 und dem Formnest 203 eine radial und koaxial zur Längsachse L ausgerichtete Innendichtfläche 205 auf. Dabei liegen die zweite Dichtfläche 50 des Düsenmundstücks 1 und die Innendichtfläche 205 der Formangussöffnung 202 dichtend aneinander.

Erkennbar ist der Düsenkörper 101 der Spritzgießdüse 100 radial von einer manschettenförmigen Heizeinrichtung 112 umfasst. Außerdem ist der Düsenkörper 101 mit dem Kanaleingang 103 des Strömungskanals 102, insbesondere mit seinem Düsenkopf 107, an einem Materialzubringer 120 angeordnet, insbesondere an einer Maschinendüse oder an einem Verteiler.

Die Erfindung ist nicht auf eine der vorbeschriebenen Ausführungsformen beschränkt, sondern in vielfältiger Weise abwandelbar.

**Bezugszeichenliste**

| | | | |
|---|---|---|---|
| 1 | Düsenmundstück | 111 | Manschette |
| | | 112 | Heizeinrichtung |
| 10 | Strömungskanal | | |
| 11 | Eintrittsöffnung | 120 | Materialzubringer |
| 12 | Austrittsöffnung | | |
| 13 | Formfläche | 200 | Spritzgießwerkzeug |
| 14 | Nadeldichtfläche | 201 | Formplatte |
| | | 202 | Formangussöffnung |
| 20 | erste Dichtfläche | 203 | Formnest |
| | | 204 | Koppelmittel |
| 30 | Flansch | 205 | Innendichtfläche |
| 31 | Werkzeugaufnahme | 206 | Anschlagfläche |
| 32 | Anschlagfläche | 207 | Formnestwandung |
| 33 | zweite Anschlagfläche | 208 | Innengewinde |
| | | | |
| 40 | Koppelmittel | Dmax1 | maximaler Durchmesser in Richtung der Eintrittsöffnung |
| 41 | Außengewinde | | |
| | | Dmax2 | maximaler Durchmesser in Richtung der Austrittsöffnung |
| 50 | zweite Dichtfläche | | |
| | | D14 | Durchmesser (Nadeldichtfläche) |
| 100 | Spritzgießdüse | D20 | Durchmesser (Dichtfläche) |
| 101 | Düsenkörper | D30 | Durchmesser (Flansch) |
| 102 | Strömungskanal | D40 | Durchmesser (Koppelmittel) |
| 103 | Kanaleingang | D50 | Durchmesser (zweite Dichtfläche) |
| 104 | Kanalausgang | L | Längsachse |
| 105 | Dichtfläche | M | fließfähige Masse |
| 106 | Anschlagfläche | S | Luftspalt |
| 107 | Düsenkopf | | |
| 108 | Düsenspitze | | |
| | | | |
| 110 | Verschlussnadel | | |

## Patentansprüche

1. Düsenmundstück (1) für eine Spritzgießdüse (100) zur Verwendung in einem Spritzgießwerkzeug (200) und zur Verarbeitung einer fließfähigen Masse (M), umfassend einen Strömungskanal (10) mit einer Eintrittsöffnung (11) und einer Austrittsöffnung (12), eine radial zu einer Längsachse (L) ausgebildete zylindrische erste Dichtfläche (20), wobei ausgehend von der ersten Dichtfläche (20) der radial zur Längsachse (L) ausgerichtete Durchmesser (D20) der ersten Dichtfläche (20) größer oder gleich dem radial zur Längsachse (L) ausgerichteten maximalen Durchmesser (Dmax1) des Düsenmundstücks (1) in Richtung der Eintrittsöffnung (11) ist, und eine zwischen der ersten Dichtfläche (20) und der Austrittsöffnung (12) angeordnete Anschlagfläche (32), die quer zur Längsachse (L) sowie in Richtung der Austrittsöffnung (12) weisend ausgerichtet ist, **gekennzeichnet durch**
• ein radial zur Längsachse (L) angeordnetes Koppelmittel (40) zur Festlegung des Düsenmundstücks (1) in einer Formangussöffnung (202) einer Formplatte (201), wobei das Koppelmittel (40) ein Außengewinde (41) oder ein Bajonettmittel ist, und wobei das Koppelmittel (40) zwischen der Anschlagfläche (32) und der Austrittsöffnung (12) angeordnet ist.

2. Düsenmundstück (1) nach Anspruch 1, **dadurch gekennzeichnet, dass** dieses aus einem verschleißfesten Material besteht.

3. Düsenmundstück (1) nach einem der vorhergehenden Ansprüche, **dadurch gekennzeichnet, dass** zwischen dem Koppelmittel (40) und der Austrittsöffnung (12) eine radial zur Längsachse (L) ausgerichtete außenseitige zweite Dichtfläche (50) ausgebildet ist.

4. Düsenmundstück (1) nach einem der vorhergehenden Ansprüche, **dadurch gekennzeichnet, dass** die Austrittsöffnung (12) radial zur Längsachse (A) von einer stirnseitigen Formfläche (13) umgeben ist, die in einer Montageposition einen Bereich eines Formnestes (203) formgebend begrenzt.

5. Düsenmundstück (1) nach einem der vorhergehenden Ansprüche, **dadurch gekennzeichnet, dass** im Strömungskanal (10) eine radial zur Längsachse (L) ausgerichtete Nadeldichtfläche (14) für eine Verschlussnadel (110) ausgebildet ist.

6. Düsenmundstück (1) nach einem der Ansprüche 1 bis 4, **dadurch gekennzeichnet, dass** dieses einen offenen Anguss ausbildet.

7. **Spritzgießdüse** (100) zur Verwendung in einem Spritzgießwerkzeug (200) und zur Verarbeitung einer fließfähigen Masse (M),
• mit einem Düsenkörper (101), in dem wenigstens ein Strömungskanal (102) mit einem Kanaleingang (103) und einem Kanalausgang (104) für die fließfähige Masse (M) ausgebildet ist,
• wobei der Strömungskanal (102) mit seinem Kanalausgang (104) an oder in eine Eintrittsöffnung (11) eines Düsenmundstücks (1) gemäß einem der vorhergehenden Ansprüche mündet,
• wobei der Düsenkörper (101) im Bereich des Kanalausgangs (104) eine radial zur Längsachse (L) ausgerichtete zylindrische Dichtfläche (105) ausbildet, und
• wobei das Düsenmundstück (1) mit seiner ersten Dichtfläche (20) dichtend und in Richtung der Längsachse (L) verschieblich an der Dichtfläche (105) des Düsenkörpers (101) gelagert ist.

8. **Spritzgießwerkzeug** (200) zur Verarbeitung einer fließfähigen Masse (M), mit
• einer Spritzgießdüse (100) nach Anspruch 7, und
• einer Formplatte (201), die ein Formnest (203) ausbildet, in das eine Formangussöffnung (202) mündet,
• wobei das Düsenmundstück (1) mit seiner Austrittsöffnung (12) in die Formangussöffnung (202) eingeführt ist, und
• wobei die Formangussöffnung (202) ein Koppelmittel (204) aufweist, welches mit dem Koppelmittel (40) des Düsenmundstücks (1) in Eingriff steht.

9. Spritzgießwerkzeug (200) nach Anspruch 8, **dadurch gekennzeichnet, dass** die Austrittsöffnung (12) des Düsenmundstücks (1) radial zur Längsachse (A) von einer stirnseitigen Formfläche (13) umgeben ist, die einen Bereich des Formnestes (203) formgebend begrenzt.

10. Spritzgießwerkzeug (200) nach einem der Ansprüche 8 oder 9, **dadurch gekennzeichnet, dass** die Anschlagfläche (32) des Düsenmundstücks (1) an einer die Formangussöffnung (202) radial umgebenden Anschlagfläche (206) der Formangussöffnung (202) anliegt.

11. Spritzgießwerkzeug (200) nach einem der Ansprüche 8 bis 10, **dadurch gekennzeichnet, dass** das Düsenmundstück (1) zwischen dem Koppelmittel (40) und der Austrittsöffnung (12) eine radial zur Längsachse (L) ausgerichtete äußere zweite Dichtfläche (50) aufweist, und dass die Formangussöffnung (202) zwischen ihrem Koppelmittel (204) und dem Formnest (203) eine radial zur Längsachse (L) ausgerichtete Innendichtfläche (205) aufweist, wobei die zweite Dichtfläche (50) des Düsenmundstücks (1) und die Innendichtfläche (205) der Formangussöffnung (202) dichtend aneinander liegen.

## Claims

1. Nozzle tip (1) for an injection moulding nozzle (100) for use in an injection moulding tool (200) and for processing a free-flowing substance (M), comprising a flow channel (10) with an entry opening (11) and an exit opening (12), a cylindrical first sealing surface (20) formed radially to a longitudinal axis (L), wherein, taken from the first sealing surface (20), the diameter (D20) of the first sealing surface (20) radial to the longitudinal axis (L) is greater than or equal to the maximum diameter (Dmax1) of the nozzle tip (1) radial to the longitudinal axis (L) in the direction of the entry opening (11), and an abutment surface (32) which is arranged between the first sealing surface (20) and the exit opening (12) and is oriented transversely to the longitudinal axis (L) and pointing in the direction of the exit opening (12), **characterised by**
• a coupling means (40) arranged radially to the longitudinal axis (L) for securing the nozzle tip (1) in a mould sprue opening (202) of a mould plate (201), wherein the coupling means (40) is an external thread (41) or a bayonet means, and wherein the coupling means (40) is arranged between the abutment surface (32) and the exit opening (12).

2. Nozzle tip (1) according to claim 1, **characterised in that** it is made from a wear-resistant material.

3. Nozzle tip (1) according to any one of the preceding claims, **characterised in that** between the coupling means (40) and the exit opening (12) an outer second sealing surface (50) is formed which is oriented radially to the longitudinal axis (L).

4. Nozzle tip (1) according to any one of the preceding claims, **characterised in that** the exit opening (12) is surrounded by an end face moulding surface (13) radial to the longitudinal axis (A), which moulding surface (13) delimits an area of a mould cavity (203) in a shaping manner when in an mounted position.

5. Nozzle tip (1) according to any one of the preceding claims, **characterised in that** a needle sealing surface (14) for a shut-off needle (110) is formed in the flow channel (10), the needle sealing surface being oriented radially to the longitudinal axis (L).

6. Nozzle tip (1) according to any one of claims 1 to 4, **characterised in that** it forms an open sprue.

7. Injection moulding nozzle (100) for use in an injection moulding tool (200) and for processing a free-flowing substance (M),
• with a nozzle body (101), in which at least one flow channel (102) is formed with a channel entry (103) and a channel exit (104) for the free-flowing substance (M),
• wherein the flow channel (102) with its channel exit (104) discharges onto or into an entry opening (11) of a nozzle tip (1) according to any one of the preceding claims,
• wherein in the region of the channel exit (104), the nozzle body (101) forms a cylindrical sealing surface (105) oriented radially to the longitudinal axis (L) and
• wherein the nozzle tip (1) with its first sealing surface (20) is mounted in a sealing manner and in the direction of the longitudinal axis (L) displaceably on the sealing surface (105) of the nozzle body (101).

8. Injection moulding tool (200) for processing a free-flowing substance (M), with
• an injection moulding nozzle (100) according to claim 7, and
• a mould plate (201) that forms a mould cavity (203) into which a mould sprue opening (202) discharges,
• wherein the nozzle tip (1) with its exit opening (12) is inserted into the mould sprue opening (202), and
• wherein the mould sprue opening (202) comprises a coupling means (204) which is in engagement with the coupling means (40) of the nozzle tip (1).

9. Injection moulding tool (200) according to claim 8, **characterised in that** the exit opening (12) of the nozzle tip (1) is surrounded radially to the longitudinal axis (A) by an end face moulding surface (13), which moulding surface delimits an area of the mould cavity (203) in a shaping manner.

10. Injection moulding tool (200) according to any one of claims 8 or 9, **characterised in that** the abutment surface (32) of the nozzle tip (1) bears against an abutment surface (206) of the mould sprue opening (202) that radially surrounds the mould sprue opening (202).

11. Injection moulding tool (200) according to any one of claims 8 to 10, **characterised in that** the nozzle tip (1) has an outer second sealing surface (50) between the coupling means (40) and the exit opening (12) oriented radially to the longitudinal axis (L), and **in that** the mould sprue opening (202) has an inner sealing surface (205) between its coupling means (204) and the mould cavity (203) oriented radially to the longitudinal axis (L), wherein the second sealing surface (50) of the nozzle tip (1) and the inner sealing surface (205) of the mould sprue opening (202) bear against one another in a sealing manner.

## Revendications

1. Embouchure de buse (1) pour une buse de moulage par injection (100) pour être utilisée dans un outil de moulage par injection (200) et pour traiter une matière (M) pouvant s'écouler, comprenant un canal d'écoulement (10) avec un orifice d'entrée (11) et un orifice de sortie (12), une première surface étanche (20) cylindrique réalisée de manière radiale par rapport à un axe longitudinal (L), dans laquelle le diamètre (D20), orienté de manière radiale par rapport à l'axe longitudinal (L), de la première surface étanche (20) est, en partant de la première surface étanche (20), plus grand ou égal au diamètre maximal (Dmax1), orienté de manière radiale par rapport à l'axe longitudinal (L), de l'embouchure de buse (1) en direction de l'orifice d'entrée (11), et une surface de butée (32) disposée entre la première surface étanche (20) et l'orifice de sortie (12), laquelle est orientée de manière transversale par rapport à l'axe longitudinal (L) ainsi qu'en pointant en direction de l'orifice de sortie (12), **caractérisée par**
- un moyen de couplage (40) disposé de manière radiale par rapport à l'axe longitudinal (L), pour fixer l'embouchure de buse (1) dans un orifice d'injection de moulage (202) d'une plaque de moulage (201), dans laquelle le moyen de couplage (40) est un filetage extérieur (41) ou un moyen à baïonnette, et dans laquelle le moyen de couplage (40) est disposé entre la surface de butée (32) et l'orifice de sortie (12).

2. Embouchure de buse (1) selon la revendication 1, **caractérisée en ce qu'**elle est constituée d'un matériau résistant à l'usure.

3. Embouchure de buse (1) selon l'une quelconque des revendications précédentes, **caractérisée en ce qu'**une deuxième surface étanche (50) située côté extérieur, orientée de manière radiale par rapport à l'axe longitudinal (L) est réalisée entre le moyen de couplage (40) et l'orifice de sortie (12).

4. Embouchure de buse (1) selon l'une quelconque des revendications précédentes, **caractérisée en ce que** l'orifice de sortie (12) est entouré de manière radiale par rapport à l'axe longitudinal (A) d'une surface de moulage (13) située côté frontal, laquelle délimite par mise en forme, dans une position de montage, une zone d'une cavité de moulage (203).

5. Embouchure de buse (1) selon l'une quelconque des revendications précédentes, **caractérisée en ce qu'**une surface étanche d'aiguille (14) orientée de manière radiale par rapport à l'axe longitudinal (L) est réalisée pour une aiguille de fermeture (110) dans le canal d'écoulement (10).

6. Embouchure de buse (1) selon l'une quelconque des revendications 1 à 4, **caractérisée en ce qu'**elle réalise un culot d'injection ouvert.

7. Buse de moulage par injection (100) pour être utilisée dans un outil de moulage par injection (200) et pour traiter une matière (M) pouvant s'écouler,
- comprenant un corps de buse (101), dans lequel au moins un canal d'écoulement (102) est réalisé avec une entrée de canal (103) et une sortie de canal (104) pour la matière (M) pouvant s'écouler,
- dans laquelle le canal d'écoulement (102) débouche par sa sortie de canal (104) au niveau de ou dans un orifice d'entrée (11) d'une embouchure de buse (1) selon l'une quelconque des revendications précédentes,
- dans laquelle le corps de buse (101) réalise, dans la zone de la sortie de canal (104), une surface étanche (105) cylindrique orientée de manière radiale par rapport à l'axe longitudinal (L), et
- dans laquelle l'embouchure de buse (1) est montée en assurant l'étanchéité par sa première surface étanche (20) et de manière mobile par coulissement en direction de l'axe longitudinal (L) au niveau de la surface étanche (105) du corps de buse (101).

8. Outil de moulage par injection (200) pour traiter une matière (M) pouvant s'écouler, comprenant
- une buse de moulage par injection (100) selon la revendication 7, et
- une plaque de moulage (201), qui réalise une cavité de moulage (203), dans laquelle un orifice d'injection de moulage (202) débouche,
- dans lequel l'embouchure de buse (1) est introduite par son orifice de sortie (12) dans l'orifice d'injection de moulage (202), et
- dans lequel l'orifice d'injection de moulage (202) présente un moyen de couplage (204), qui est en prise avec le moyen de couplage (40) de l'embouchure de buse (1).

9. Outil de moulage par injection (200) selon la revendication 8, **caractérisé en ce que** l'orifice de sortie (12) de l'embouchure de buse (1) est entouré de manière radiale par rapport à l'axe longitudinal (A) par une surface de moulage (13) située côté frontal, laquelle délimite par mise en forme une zone de la cavité de moulage (203).

10. Outil de moulage par injection (200) selon l'une quelconque des revendications 8 ou 9, **caractérisé en ce que** la surface de butée (32) de l'embouchure de buse (1) repose au niveau d'une surface de butée (206), entourant de manière radiale l'orifice d'injection de moulage (202), de l'orifice d'injection de moulage (202).

11. Outil de moulage par injection (200) selon l'une quelconque des revendications 8 à 10, **caractérisé en ce que** l'embouchure de buse (1) présente, entre le moyen de couplage (40) et l'orifice de sortie (12), une deuxième surface étanche (50) extérieure orientée de manière radiale par rapport à l'axe longitudinal (L), et que l'orifice d'injection de moulage (202) présente, entre son moyen de couplage (204) et la cavité de moulage (203), une surface étanche intérieure (205) orientée de manière radiale par rapport à l'axe longitudinal (L), dans lequel la deuxième surface étanche (50) de l'embouchure de buse (1) et la surface étanche intérieure (205) de l'orifice d'injection de moulage (202) reposent l'une contre l'autre en assurant l'étanchéité.
